# EUROPÄISCHE PATENTSCHRIFT

(11) **EP 2 672 472 B1**
(45) Veröffentlichungstag und Bekanntmachung des Hinweises auf die Patenterteilung: **13.07.2016**
(21) Anmeldenummer: 13169937.3
(22) Anmeldetag: 30.05.2013
(51) Int. Cl.: H04Q 9/00, G08B 21/04, G08C 21/00

(54) **Verfahren und Vorrichtung zur Überwachung der momentanen Mobilität von Personen in privaten oder öffentlichen Räumen**
Method and apparatus for monitoring the current mobility of persons in private or public spaces
Procédé et dispositif de surveillance de la mobilité momentanée de personnes dans des locaux privés ou publics

(30) Priorität: 07.06.2012 DE 102012209612; 28.03.2013 DE 202013101354 U
(43) Veröffentlichungstag der Anmeldung: 11.12.2013
(73) Patentinhaber: Shammout, Yazid, 31275 Lehrte (DE); Köplin, Jörg, 15711 Zeesen (DE)
(72) Erfinder: Shammout, Yazid, 31275 Lehrte (DE); Köplin, Jörg, 15711 Zeesen (DE)
(74) Vertreter: Gulde & Partner

(56) Entgegenhaltungen:
- EP-A2- 2 105 897
- GB-A- 2 485 058
- US-A- 6 108 685

## Beschreibung

Die Erfindung betrifft ein Verfahren zur Überwachung der momentanen Mobilität von Personen in privaten oder öffentlichen Räumen gemäß Anspruch 1 sowie eine Vorrichtung zur Durchführung des Verfahrens gemäß Anspruch 4.
Die weiteren Ansprüche geben zweckmäßige Ausgestaltungen des erfindungsgemäßen Verfahrens bzw. der erfindungsgemäßen Vorrichtung wieder.

Der demographische Wandel, die durch eine stetig verbesserte medizinische Versorgung längere Lebenszeit und die gestiegenen Ansprüche an die Lebensqualität sowie insbesondere die auf einem niedrigen Stand stagnierende Fertilitätsrate stellen die sozialen Sicherungssysteme und die Integrationsfähigkeit älterer Mitbürger in die Gesellschaft vor große Herausforderungen.

Ein ganz wesentliches Problem für Menschen im höheren Alter stellen Stürze dar. Sie sind eine der häufigsten Ursachen für die Einschränkung bzw. den Verlust der Unabhängigkeit. 30 % der über 65-jährigen stürzen mindestens einmal pro Jahr, bei über 80-jährigen steigt diese Zahl auf über 80 %. Die Konsequenzen sind oft schwerwiegend.
In mehr als 20 % der Fälle tritt eine Verletzung, meistens eine Fraktur (56 %), auf. Die Hälfte der Sturzereignisse hat zudem eine dauerhafte Reduktion der Mobilität zur Folge.

Ein weiteres Problem ist die frühzeitige Erkennung eines Sturzes und das damit verbundene Herbeirufen von Hilfe durch die gestürzte Person, im Extremfall das Feststellen des Ablebens einer oder mehrerer Personen.

Bekannt sind mobile Verfahren, bei denen am Arm oder an der Kleidung von Personen mit körperlichen und/oder geistigen Einschränkungen, z. B. altersbedingter Demenz, Transponder oder vergleichbare Sensoren befestigt werden, welche bei Gefahr oder gesundheitlichen kritischen Umständen per Knopfdruck einen Alarm auslösen. Bei diesen Verfahren müssen die betroffenen Personen aktiv mitwirken. Das bedeutet, dass die betroffenen Personen nicht vergessen dürfen, diese Sensoren zu tragen und nicht versuchen dürfen, diese gewaltsam zu entfernen. Die Batterien oder andere Energieträger der Sensoren müssen geladen sein. Bei RFID-Systemen ist ein Netz von aktiven Antennen notwendig.

Alle diese Erwartungen werden von den Betroffenen oftmals nicht erfüllt. Deshalb wurden bereits statische technische Hilfsmittel eingesetzt, bei denen in der Wohneinheit der betroffenen Person(en) eine Alarmierungseinrichtung installiert wird. An einer derartigen Einrichtung steht zur direkten manuellen Betätigung ein Schalter oder Knopf zur Verfügung, um beispielsweise einen Notruf an eine Hilfsorganisation, wie das Rote Kreuz, zu tätigen. Wenn die in Not geratene Person allerdings bewusstlos oder handlungsunfähig am Boden liegt oder ihre Bewegung dermaßen eingeschränkt ist, dass der Weg zum Notschalter verwehrt bleibt, kommt es häufig vor, dass die notwendige Unterstützung durch Pflegepersonal oder Notärzte erheblich zu spät eintrifft und die möglichen medizinischen Hilfsmaßnahmen erheblich erschwert werden. Schlimmstenfalls kann für die bedürftige Person jede Hilfe zu spät kommen.

Technische aufwendige Lösungen, den Bodenbelag mit Sensoren zu versehen, sind bekannt, werden aber lediglich als Ergänzung zu bestehenden Systemen verstanden. Zudem sind diese Systeme aufwendig in der Installation und sehr kostenintensiv.

Weiterhin bekannt sind automatische Sicherheitssysteme, bei denen die Vital-Werte, wie Blutdruck, Puls, Sauerstoffsättigung, zur Analyse des Gesundheitszustandes am Körper gemessen, evtl. gespeichert und zentral ausgewertet werden.
Es ist jedoch fraglich, ob bei einem komplexen System aus Sensor (muss am Körper getragen werden; Übertragung der Werte muss gesichert werden) und/oder Notschalter an der Wand, und/oder Empfängersysteme in der Wohnung und dem damit verbundenen aktiven Zutun, es für den Betroffenen tatsächlich möglich ist, eine hinreichende Qualität einer Gefährdungsanalyse zu sichern. Allein die menschlichen Faktoren Überforderung und Vergesslichkeit können dazu führen, dass wegen des Fremdkörpereindrucks die Sensoren oder eine Sensorkleidung entfernt werden, unbekannte Gerätschaften aus der Wohnung entfernt werden, der Notschalter/Knopf nicht gefunden wird oder eine Not-Rufnummer unbekannt ist.

Die Schrift EP 0600571B1 betrifft ein elektronisches Lebensdetektionssystem, insbesondere für die Suche nach Verschütteten oder die Überwachung von Gebäuden, mit einer Mikrowellensende-/-empfangseinrichtung zur Erzeugung und Einstrahlung von Mikrowellen in einen zu untersuchenden Bereich und zur Registrierung des aus dem überwachten Bereich reflektierten, bei Anwesenheit von Lebewesen in dem Bereich mit deren Lebensfunktionen entsprechenden Frequenzen modulierten Mikrowellensignals, die eine erste und eine zweite Signalaufbereitungseinrichtung aufweist.

Die US 5,905,436 und die US 8,115,641 B1 beschreiben Überwachungssysteme, die die Position von Personen bzw. Bewegungen in unterschiedlichen Ebenen detektieren. Die US 7,916,006 B1 beschreibt ein Radarsystem zur Erfassung der Position von Personen.

Der Erfindung liegt die Aufgabe zugrunde, ein Verfahren und eine Vorrichtung bereitzustellen, mit denen, gegebenenfalls ergänzend zu den bekannten Systemen, eine nicht kooperative effiziente Mobilitätsanalyse von Personen möglich ist, bei gleichzeitig hohem Grad der Automatisierung im Falle einer möglichen Gefahrenmeldung.

Gelöst wird die Aufgabe durch ein Verfahren zur Überwachung der momentanen Mobilität von Personen in privaten oder öffentlichen Räumen, bei dem mittels einer in der zu überwachenden Räumlichkeit sich vertikal, beispielsweise vom Boden bis über die Kopfhöhe einer Person hinaus erstreckenden und in Überwachungssektoren aufgeteilten Sensorik ermittelt wird, ob sich eine in dem Raum befindliche Person in einer stehenden bzw. laufenden oder in einer von dieser Position abweichenden Position befindet.

In Abhängigkeit von der Art der Räumlichkeit, von der Tageszeit, von der Häufigkeit und dem Zeitablauf der in den Überwachungssektoren ermittelten Bewegungen wird auf eine gestörte oder ungestörte Mobilität der Person geschlossen. Die Sensoren werden samt der dazugehörenden Bauelemente vertikal in der Leiste verbaut. Die Leiste kann dabei sowohl auf- als auch unterputz montiert werden. Die Leiste, die mithin das Gesamtsystem dieser Erfindung umfasst, ist aber auch als eigenständig funktionierendes System (Stand-alone-Gerät) ohne besondere Montage) in der einfachsten Version lediglich durch Anschluss an eine übliche Stromquelle (Steckdose) voll funktionsfähig.

Die Sensoren detektieren Bewegungen innerhalb eines definierten Bereiches, in der Länge und Breite und Höhe. Durch die Aufteilung des Raumes in waagerechten (virtuelle) Ebenen wird der Aufenthalt einer Person am Boden (liegend oder ähnlich) erkannt.
Bei dem Verdacht einer gestörten Mobilität findet eine automatische Alarmierung in differenzierten Eskalationsstufen statt.

Eine Person wird als mobil eingeschätzt, wenn die Anzahl der Erfassungen in der oberen waagerechten Zone einen definierten Schwellwert überschreitet.

Mit der GB 2485058 wird ein Verfahren zur Überwachung der momentanen Mobilität von Personen in privaten oder örtlichen Räumen beschrieben, wobei mittels einer in einem zu überwachen Raum sich vertikal vom Boden erstreckenden und in mindestens zwei Überwachungssektoren aufgeteilten Sensorik ermittelt wird, ob sich eine in dem Raum befindliche Person in einer stehenden oder laufenden oder in einer von dieser Position befindet, dass in Abhängigkeit von der Art der Räumlichkeit, von der Tageszeit und von der Häufigkeit und dem Zeitablauf der in den Überwachungssektoren ermittelten Bewegungen auf eine gestörte oder ungestörte Mobilität der Person geschlossen wird und automatisch vorgegebene Maßnahmen ausgelöst werden.

Die ermittelten Bewegungen werden softwaremäßig als Bewegungsparameter erlernt und durch Vergleich mit einem in einem Datenübermittlungsmodul hinterlegten typischen Bewegungsparametern logisch und analytisch ausgewertet. Hierdurch wird eine untypische tägliche Mobilität von einer typischen täglichen Mobilität unterschieden.

Die EP 2105897 beschreibt ein Verfahren, eine lokale Verarbeitungseinheit und eine Einrichtung zum Überwachen mindestens einer Person. Bei dem Verfahren zum Überwachen der mindestens einen Person wird die mindestens eine Person durch mindestens einen Sensor erfasst. Von dem mindestens einen Sensor über die mindestens eine Person bereitgestellte Daten werden von der lokalen Verarbeitungseinheit vorverarbeitet. Die vorverarbeiteten Daten werden von der lokalen Verarbeitungseinheit zu einer weiteren Bearbeitung weitergeleitet.

Die eingeschätzte Mobilität wird mit der Anzahl an Aktivitäten der jeweiligen waagerechten Zone (rot/gelb/grün) elektronisch ausgewertet und berechnet. Das heißt, zu wenige Aktivitäten in der grünen Zone und zu viele in der roten Zone, kann nach einem elektronischen Lernprozess (Fuzzylogic) als Indikator für eine eingeschränkte/außergewöhnliche momentane Situation gewertet werden.
Grundlage der Fuzzylogic sind die durchaus unscharfen Mengen (fuzzy sets) der Detektion von Bewegungen in einer bestimmten Zeit. In Kombination mit der Probabilität ist eine Deutung der jeweiligen Mobilität - mindestens einer Person - möglich. Da es sich jeweils um eine Schätzung der Mobilität einer Person handelt, ist ein rein mathematisches Vorhersagen einer Situation nicht hilfreich. Erst die Auswertung von erlernten Verhaltensmustern und Lebensgewohnheiten - in Abhängigkeit von Raum und Zeit - macht diese Vorrichtung zur Erkennung der Mobilität einer Person berechenbar. Jede Erstalarm-Quittierung an der Leiste selbst zwingt das Gesamtsystem dazu, den Schwellwert seiner Erstalarmierung neu anzupassen, da diese Quittierung als Rückfallebene zum Schutz vor Fehlalarmierung im Bezug auf die weitere Alarmierung nach "Außen" dient.

Die Alarmierung löst lokale akustische und optische Signale aus und steigert sich bis hin zur Funk- bzw. Telefonalarmierung, welche in zweckmäßiger Weise eine Wechselsprechfunktion zu der in der jeweiligen Räumlichkeit befindlichen Person herstellt, so dass deren Befindlichkeit erfragt werden kann. Bei Nichtreaktion oder negativer Aussage der Person ist vorgesehen, ggf. automatisch ein Notsignal zur Hilfeleistung auszulösen. Als von der stehenden bzw. laufenden Position abweichende Position wird eine sitzende, auf einem Liegemöbel liegende oder auf dem Boden liegende bzw. knieende Position detektiert.
Vorteil des Systems ist, dass keine aktive Mitarbeit von Hilfebedürftigen oder von anderen Personen notwendig ist, um eine Alarmierung auszulösen.
Die Aktivierung oder Deaktivierung der Mobilitätsanalyse erfolgt über ein Modul, welches am jeweiligen Eingangs-/oder Ausgangsbereich der Wohnung angebracht werden kann und mit einer jeweiligen Sensorleiste interagiert - damit ist eine vollkommene autarke Arbeitsweise der Mobilitäsanalyse möglich. Mit dieser Einrichtung wird das Öffnen der Tür erkannt und die darauf folgende Bewegung im definierten Sektor des Innenbereiches der Wohnung - ermöglicht die Schlussfolgerung, dass in der Wohnung sich jemand aufhält. Um eine Fehlinterpretation (zum Beispiel durch Haustiere) zu vermeiden, wird die Erfassung von Bewegungen hinter der Tür (im Inneren der Wohnung) im oberen Bereich analysiert.

Bei Vorhandensein von Bewegung im Inneren der Wohnung (bei Türöffnung und nach Türschließung) wird die Sensorleiste direkt aktiviert; bei nicht Vorhandensein von Bewegung im Inneren der Wohnung (bei Türöffnung und nach Türschließung) wird die Sensorleiste zeitgesteuert deaktiviert.
Bei Anwesenheit mehrerer Personen wird das System in einen Stand-by-Status gefahren.

Darüber hinaus erkennt das System selbstständig, ob beispielsweise durch schwere Krankheit eine eingeschränkte Mobilität vorliegt bzw. ob durch Tod keine Mobilität mehr stattfindet und alarmiert entsprechend. Die vorzugsweise Einteilung der Wohnung in mehren waagerechte Detektionsabschnitte macht es möglich, die Anzahl der Bewegungen im jeweiligen Abschnitt zu analysieren; eine vermehrte Bewegungsdetektion ausschließlich im untersten Abschnitt kann beispielsweise als Indiz für einen Sturz oder erhebliche Einschränkung der Mobilität gewertet werden. Letztendlich wird durch die mögliche fehlende Quittierung (akustisch, elektronisch oder mechanisch etc.) an der Sensorleistung von einem Notfall ausgegangen, um selbstständig weitere, als Eskalationsstufen bezeichnete Verfahren zu initiieren.

Die Vorrichtung zur Überwachung der momentanen Mobilität von Personen in privaten oder öffentlichen Räumen ist dadurch gekennzeichnet, dass in einem zu überwachenden Raum eine vertikale Sensorleiste angeordnet ist, die aus zwei oder mehr übereinander angeordneten Bewegungsmeldern besteht, die den überwachten Raum in relativ exakte waagerechte Detektionsebenen abhängig von der Anzahl der Sensoren aufteilen, wobei jeder Sensor in seiner Detektionsebene elektronisch den aktuellen Status der Bewegung erfasst und dass ein Datenübermittlungsmodul vorgesehen ist, in dem der erfasste Status softwaremäßig als Bewegungsparameter lernbar, durch Vergleich mit im Datenübermittlungsmodul hinterlegten typischen Bewegungsparametem logisch und analytisch auswertbar und somit eine untypische tägliche Mobilität von einer typischen täglichen Mobilität unterscheidbar ist.
Vorzugsweise wird die Anordnung der Sensoren so gestaltet, dass mindestens drei waagerechten Detektionsebenen entstehen. Dabei ist wesentliche, dass weitere bereits verbaute Sensoren automatisch zuschaltbar sind. Somit werden unterschiedliche Personengrößen und Raumgrößen ausgeglichen.

Um die Zuverlässigkeit und Genauigkeit der Lebensumstände einer Person zu detektieren, ist die Interaktion mehrerer Leisten möglich. Dazu wird in jedem möglichen Aufenthaltsbereich der Person (pro Raum) mindestens eine Leiste platziert. Diese wiederum sind in der Lage, den jeweiligen Status der momentanen Detektion weiterzuleiten. Dabei wird festgestellt, ob und wie oft ein oder mehrere Räume aufgesucht werden - diese Information hilft besonders bei großen Wohnungen mit mehreren Personen. Die Anzahl der Personen pro Raum wiederum ist für dieses System irrelevant.

Sollte eine Person in einem Raum stürzen, so wird angenommen, dass die 2. Person im gleichen Raum eine Hilfestellung oder Alarmierung durchführen kann. Nur im Fall, dass die Bewegungen (Anzahl der Detektion, in Abhängigkeit zurzeit) in einem oder mehreren Räumen vom Normalfall abweichen, werden Eskalationsstufen aktiv.

In Ausgestaltung der Vorrichtung ist ein Datenmodul vorgesehen, in dem der erfasste Status, über einen definierbaren Zeitraum lembar und softwaremäßig als Algorithmus abgelegt wird.

Da die Mobilität individuell zu bewerten ist, wird die typische vorhandene Mobilität vorerst erfasst, um diese im Anschluss als Referenz zu nutzen. Erhebliche Abweichungen der Mobilitätsmessung vom gelernten Algorithmus werden als untypisch eingestuft. Als Bewegungsmelder sind bevorzugt handelsübliche Melder (Radar-, Infrarotbewegungsmelder und je nach Stand der Technik auch alle weiteren in Frage kommenden Melder/bzw. Sensoren) verbaut, wobei die effektive Anzahl der benutzbaren Sensoren abhängig von der Umgebung individuell bestimmt wird.

Die Sensorleiste ist in unterschiedlichen Ausbaustufen (modular) anwendbar:
- Typ 1:: Reine akustische/optische Warnung am Ort der Sensorleiste,
- Typ 2:: Reine akustisch/optisch etc. Warnung am Ort der Sensorleiste,
- Typ 3:: akustisch/optisch Warnung am Ort der Sensorleiste inklusive telefonischer Weiterleitung,
- Typ 4:: akustisch/optisch Warnung am Ort der Sensorleiste inklusive Wechselsprechanlage,
- Typ 5:: akustisch/optisch Warnung am Ort der Sensorleiste inklusive telefonischer Weiterleitung, Wechselsprechanlage, etc.

Dabei ist zu beachten, dass die Modularität der Signalisierung (der eigentlichen Gefahrenmeldung) unabhängig von der grundlegenden Funktionsweise ist.
Somit sind weitere Typen, je nach Wunsch, realisierbar.

Eine Vorrichtung zur direkten Kommunikation mit der zu überwachenden Person, insbesondere eine Wechselsprechanlage, macht es möglich, bei Verdacht einer gestörten Mobilität der überwachten Person oder bei Verdacht einer gestörten Funktion der automatischen Überwachung einen direkten Sprechkontakt zur Erfragung der Befindlichkeit herzustellen.
Es kann eine Vorrichtung vorgesehen werden, mittels der zum Schutz vor fehlerhafter Notrufabsetzung eine akustische Resonanz (Raumgeräusche, wie Herztöne oder Atemgeräusche) der zu überwachenden Person in vermeidlicher Notlage abrufbar ist.

Diese Form der Detektion ist als zusätzliche Unterstützung integrierbar, aber nicht zwingend notwendig.
Zweckmäßigerweise ist eine Recheneinheit modular an jeder Sensorleiste pro Wohnraum verbaut. Die Bauweise Master/Slavesensorleiste ist Bestandteil komplexer Wohneinheiten, um bei Bedarf die Recheneinheit auf "Eine" pro Wohnung zu reduzieren.

Das System ist so konzipiert, dass auch eine Alarmierung stattfindet, wenn bei Anwesenheit in einer Wohnung innerhalb der normalen, gespeicherten Algorithmen keine Aktivität registriert wird.
Die Energieversorgung kann per Kabel oder auch kabellos erfolgen. Um dem Nutzer die Möglichkeit zu geben, aktiv einen Notruf abzusetzen, ist ein Alarmierungssystem per Taster oder Schalter angebracht. Die Integration von einem vorhandenen Schwesternrufsystem ist integraler Bestandteil.

Die Erfindung soll an Ausführungsbeispielen anhand der Zeichnungsfiguren näher erläutert werden. Es zeigen:
- Figur 1:: einen Ablaufplan für das gesamte Überwachungssystem,
- Figur 2:: die Anordnung einer Sensorleiste in einem Raum,
- Figur 3:: als Einzelheit bei A aus Fig. 2 die Sensorik für den mittleren und unteren Detektionsbereich,
- Figur 4:: einen ersten Ablaufplan für das Überwachungssystem bei Sturzverdacht,
- Figur 5:: einen zweiten Ablaufplan für das Überwachungssystem bei Sturzverdacht,
- Figur 6:: einen dritten Ablaufplan für das Überwachungssystem bei Sturzverdacht,
- Figur 7:: einen ersten Ablaufplan für das Überwachungssystem bei positivem Mobilitätszustand,
- Figur 8:: einen zweiten Ablaufplan für das Überwachungssystem bei positivem Mobilitätszustand.

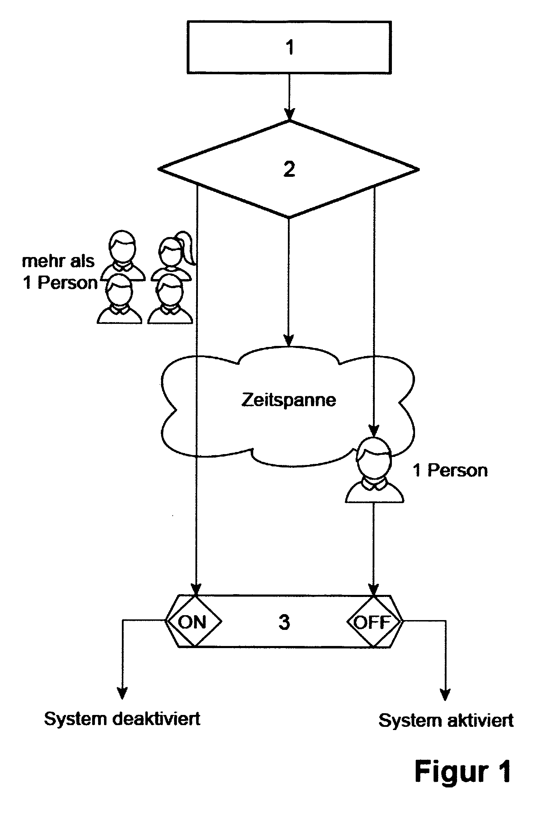

In Figur 1 wird ein System dargestellt, das ergänzend eine Anwesenheitskontrolle in der Wohnung überwacht. Dadurch werden das Betreten und das Verlassen der Wohnung überwacht. Per Funk wird dem System übermittelt, ob sich jemand in der Wohnung befindet oder nicht. Nachdem in einer zuvor definierten Zeit in den Wohnräumen keine Anwesenheit verzeichnet wird, fährt das System in einen Standby-Modus.
Das System kann ebenso in den Stand-by-Modus gefahren werden, wenn die Anwesenheitskontrolle die Anwesenheit von mehreren Personen in der Wohnung detektiert. In diesem Fall kann davon ausgegangen werden, dass in einer Notfallsituation Hilfe durch die weitere(n) anwesende(n) Person(en) geleistet wird.

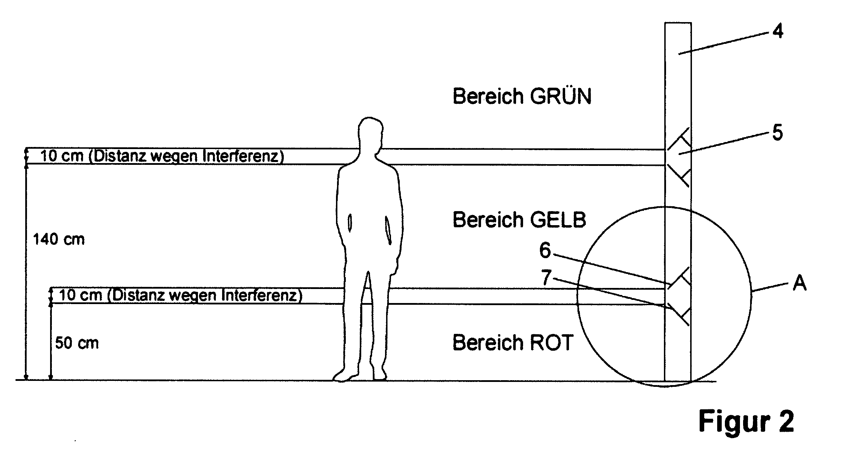

Figur 2 zeigt die Anordnung einer vertikalen Sensorleiste 4 in einem Raum sowie drei sich aus der Art und Anordnung der Sensoren 5, 6, 7 ergebenden Detektionsbereiche.
Die virtuellen Ebenen der Detektionsbereiche sind wie folgt definiert:
Rot = untere Ebene
   wobei sich die untere Detektionsebene (ROT) vom Boden aus gesehen - bis zur maximalen Höhe einer liegenden Person erstreckt - ca. 50 bis 60 cm.
Gelb = schwebende Ebene zwischen ROT und GRÜN
   die mittlere Detektionsebene (GELB) erstreckt sich oberhalb der roten Detektionsebene bis über die typische Sitzhöhe einer Person - bis ca. 150 cm.
Grün = obere Ebene
   die obere Detektionsebene erfasst die Bewegungen oberhalb der Sitzhöhe bis zum Deckenbereich.

Ein im oberen Bereich der Sensorleiste befindlicher 180°- Sensor 5 registriert die Anwesenheit einer Person. Die vertikale Sensorleiste 4 enthält im Weiteren mindestens zwei Radarbewegungsmelder 6, 7, so dass der überwachte Raum in mindestens zwei exakt oder relativ exakt waagerecht angebrachte Ebenen, jedoch bevorzugterweise in drei waagerecht oder relativ exakt waagerechte Ebenen, hier GRÜN, GELB und ROT, aufgeteilt ist. Jede Ebene bildet einen separaten Detektionsabschnitt. Alle genannten Sensoren 5, 6, 7 melden elektronisch ihren aktuellen Status der Bewegungserkennung an ein Datenübermittlungsmodul (nicht dargestellt).

Die Sensorleiste 4 ist mindestens 150 cm hoch. Sie besteht vorzugsweise aus drei Sensoren 5, 6, 7. Diese Sensoren 5, 6, 7, teilen z. B. eine Wohnung in drei waagerechte Zonen auf (siehe GRÜN, GELB, ROT). Sollten während der Überwachung des Raumes erhebliche Aktivitäten im roten Bereich registriert werden, und wiederum im gelben und grünen eine geringe Aktivität, so wird die Leiste 4 nach einem vorgegeben Muster, der detektierten Person eine Aufforderung zur Quittierung an der Leiste 4 selbst, übergeben. Ein Mehrwert wird ausdrücklich erwähnt:
Das heißt: Die Leiste 4 wird weitere Komfortmerkmale aufweisen wie Licht oder/und Akustik (Lautsprecher) oder/und Alarmanlage (Raumüberwachung während der Abwesenheit und während des Schlafens) etc.

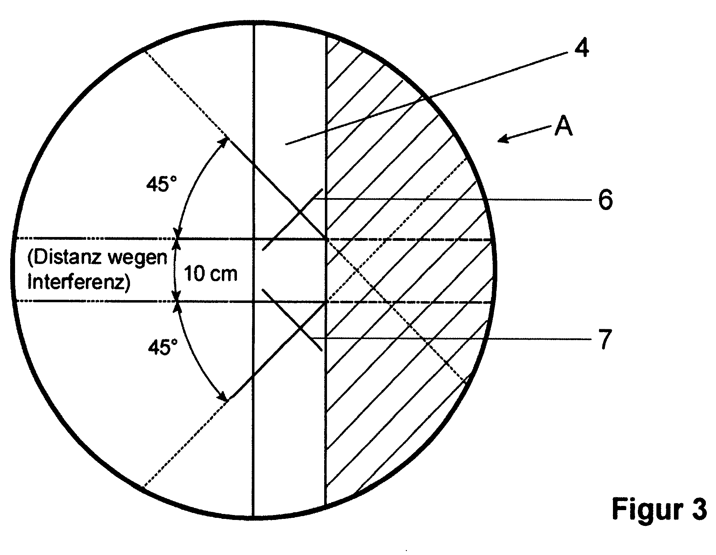

Die Einzelheit von Figur 2 in Figur 3. gibt an, wie die Radarbewegungsmelder 6, 7 für den mittleren und unteren Detektionsbereich unter Berücksichtigung sich evtl. ergebender Interferenzen an der Sensorleiste 4 angeordnet sind.

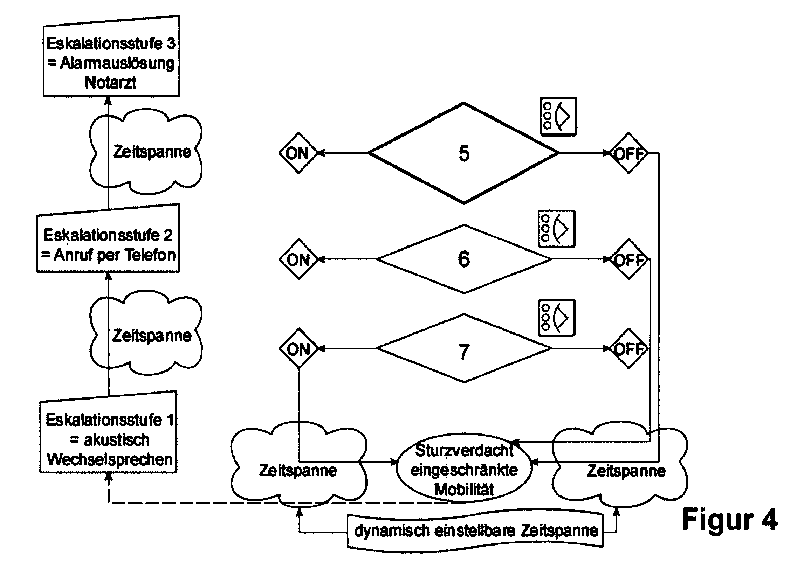

Die weiteren Figuren 4 bis 8 stellen unterschiedliche, durch die Sensorleiste 4 detektierte Mobilitätssituationen, entweder für eine positiv bewertete Mobilität oder für einen nicht als positiv bewerteten Mobilitätszustand und die sich daraus ergebenden weiteren Schritte und Alarmauslösungen, dar. Dabei geht das Detektionsverfahren von der Einschätzung aus, dass eine Person bei gegebener Mobilität sich abwechselnd für einen definierten Zeitraum in einer der überwachten Ebenen aufhält und unweigerlich Bewegungen verursacht.
Das Datenübermittlungsmodul zum Datenaustausch zwischen den Bewegungssensoren wertet die Anzahl und Häufigkeit der registrierten Bewegungen in den Detektionsbereichen in Abhängigkeit von der Art der Räumlichkeit, von der Tageszeit und von dem Zeitablauf der in den Überwachungssektoren ermittelten Bewegungen durch Vergleich mit typischen Bewegungsabläufen logisch-analytisch aus.

Sollte beispielsweise nur der Bewegungsmelder in der unteren Ebene Bewegungen und über einen definierten Zeitraum die Bewegungsmelder in der mittleren und oberen Ebene keine Bewegungen registrieren, geht das System von einer untypischen Situation, z. B. einem Sturz, aus. Werden über einen definierten Zeitraum keine neuen Bewegungen im oberen Sektor ermittelt (entspricht aufrechtem Gang), wird von einer gestörten Mobilität ausgegangen. Werden über einen längeren Zeitraum nur Bewegungen in der mittleren Ebene registriert (entspricht liegende Position), wird gemäß Standort (Schlafzimmer, Wohnzimmer,) und differenziert nach Tageszeit beurteilt, ob diese registrierte Bewegungsdetektion als typisch eingestuft werden kann. Die durchschnittlichen typischen Bewegungsparameter werden als Algorithmus zum automatischen Abgleich lokal gespeichert. Ziel ist in allen Fällen, eine typische tägliche Mobilität von einer untypischen täglichen Mobilität zu unterscheiden. Es ist vorgesehen verschiedene individuelle Varianten und Module anzubieten. Sollte in einer Variante ein externer Zugriff auf die gespeicherten Bewegungsparameter erforderlich sein, wird dieser unter Einhaltung der geltenden Datenschutzbestimmungen gewährleistet. Die wesentliche Unterscheidung liegt in der Alarmierung, die von einfacher akustischer und optischer im Gerät eingebauter lokaler Alarmierung bis hin zu einer Femalarmierung mit unterschiedlichen Anpassungen und Eskalationsstufen reicht.

Es werden grundsätzlich zwei Arten von Alarmierungen unterschieden:
1. Interne Alarmierungen
2. Externe Alarmierungen

### 1. interne Alarmierung:

Unter Zuhilfenahme von Eskalationsstufen wird in der ersten Stufe lediglich intern, akustisch und/oder optisch eine Warnung von der Leiste 4 selbst ausgesendet.

Nach einer einstellbaren, flexiblen Zeitvorgabe kann dieser (vorerst) Hinweis quittiert werden. Sollte diese Quittierung nicht stattfinden, geht dieses System von einer Notsituation aus.

Dabei ist es durch die Nutzung von Eskalationsstufen möglich, unterschiedlichste Szenarien durchzuführen.

### 2. externe Alarmierung:

Folgende Beispiele stehen für externe Alarmierung:
Notruf per Telefonsignal, Notruf per SMS, Notruf akustisch/optisch in unmittelbare Nähe, Notruf per Internet, Nutzung technischer Einrichtungen zur Weiterleitung von Informationen.

Es wird ausdrücklich darauf hingewiesen, dass eine Kombination von mindestens zwei Wegen empfohlen wird.

Die Vorrichtung erlaubt darüber hinaus eine akustische Wechselbeziehung zwischen einer Person in vermeintlicher Notlage und einen automatischen Notruf. Bevor der eigentliche Notruf vom System automatisch abgesetzt wird, sieht die Vorrichtung eine Wechselsprechfunktion vor. Außerdem kann zum Schutz vor fehlerhaften Notrufabsetzungen eine akustische Resonanz, z. B. Herztöne und/oder Atemgeräusche, der Person in vermeidlicher Notlage abgerufen werden.

Das System kann über eine An-/Aus-Kontrollleuchte verfügen. Zur Vermeidung von Fehlalarmen bewirkt das System bei Alarmierung zunächst eine lokale optische und akustische Vorwarnung. Erfolgt keine Entwarnung / Quittierung wird die Alarmierung ausgelöst. Das System lässt sich an gängige Haustelefone sowie Schwesternrufsysteme anschließen. Es ist vorgesehen, neben einer lokalen Alarmierung auch funkgesteuerte akustische und optische Alarmierungen zur Verfügung zu stellen.

Gemäß Figur 4 erfasst weder der Sensor 5 im oberen noch der Sensor 6 im mittleren Bereich sondern nur der Sensor 7 im unteren Bereich eine Person, so dass bei dieser Variante von Sturzverdacht bzw. eingeschränkter Mobilität ausgegangen werden muss und als Eskalationsstufe 1 nach geringer Zeitspanne ein akustisches Wechselsprechen eingeleitet wird.
Bei Misslingen eines Wechselgesprächs erfolgt nach kurzer Zeitspanne als Eskalationsstufe 2 ein Anruf per Telefon.
Ergibt sich auch hier keine Reaktion wird als Eskalationsstufe 3 nach geringer Zeitspanne ein Notalarm ausgelöst bzw. ein Notarzt verständigt.

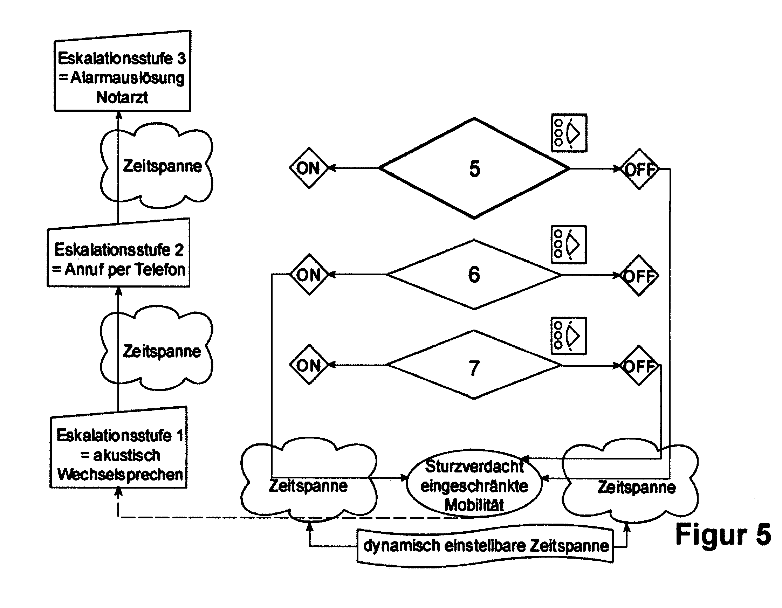

Die Variante nach Figur 5 sagt aus, dass nur durch den Sensor 6 in der mittleren Ebene eine Person erfasst wird, so dass auch hier, unter Berücksichtigung des betreffenden Raumes sowie der Tageszeit, von Sturzverdacht bzw. eingeschränkter Mobilität ausgegangen werden muss und das gleiche Eskalations- und Notrufprocedere wie in der vorherigen Variante ausgelöst wird.

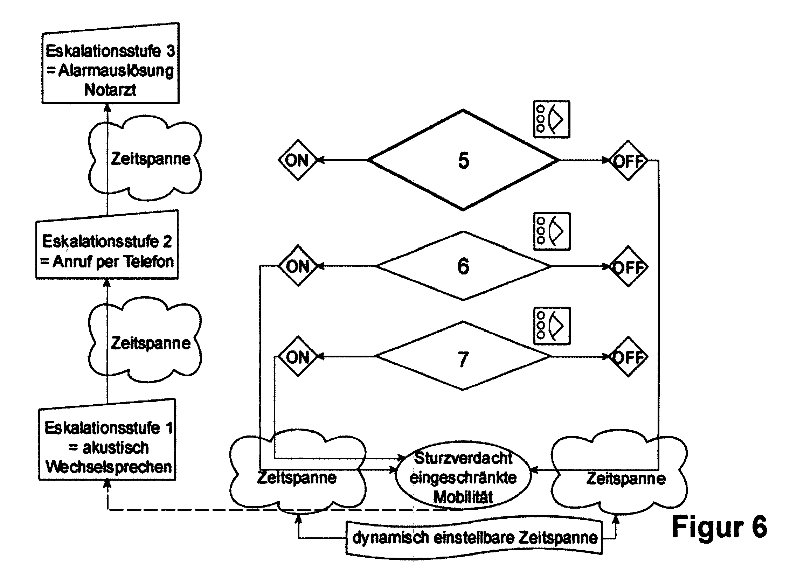

Das Gleiche trifft für die Variante nach Figur 6 zu, bei der über eine längere Zeitspanne nur in den zwei unteren Detektionsebenen die Bewegung einer Person detektiert wurde.

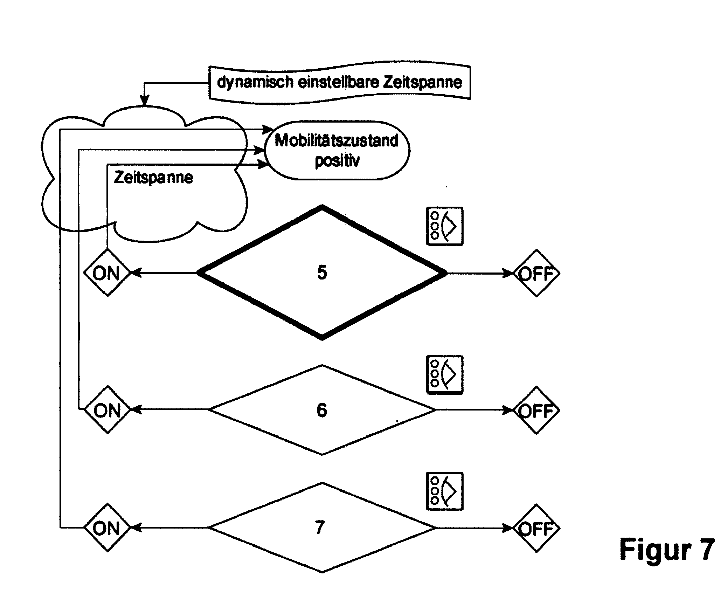

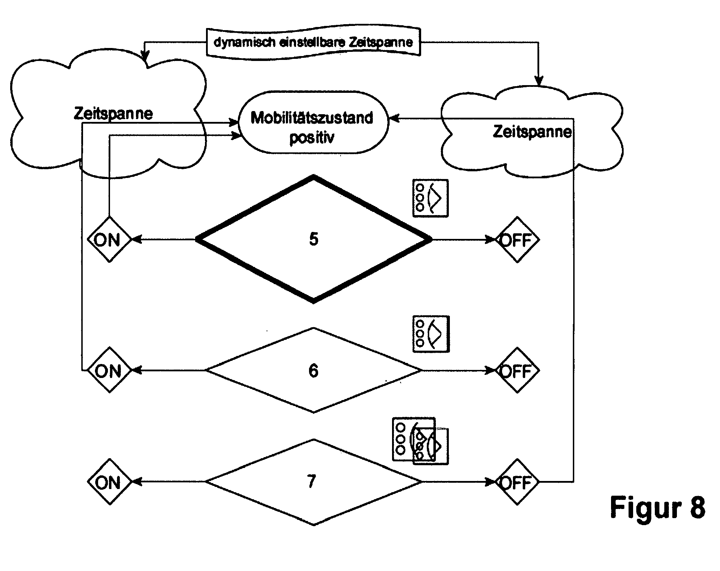

Im Gegensatz zu den vorstehend diskutierten Situationen bedeutet die Detektion einer Person durch alle drei Sensoren, wie in Figur 7 angegeben, einen positiven Mobilitätszustand, der keine weiteren Maßnahmen erforderlich macht.
Ebenso wird die Detektion nach Figur 8 bewertet, bei der in den beiden oberen Zonen eine Bewegung ermittelt wird.

Als Ergänzung zur Maßnahme "Sensorleiste" können weitere akustische, Wärme-, Geruchs-, oder Trackingsensoren individuell in den betreffenden Räumen integriert werden.
In bevorzugter Ausgestaltung der Erfindung ist vorgesehen, dass das Datenübermittlungsmodul eine zentrale Recheneinheit pro Wohnung aufweist, um zentral zu steuern und die erfassten Daten unter dem Gesichtspunkt des Datenschutzes auszuwerten. So können dem Bewohner einer Wohnung zusätzlich Serviceleistungen geboten werden, beispielsweise ein Hinweis über Pflegedienstleistungen, Alarmsicherung der gesamten Wohnung, Schutz vor Brand und Wasserschäden (evtl. durch Integrieren weiterer Sensoren), bis hin zur Interaktion mit optischen, akustischer visualisierten Animationen über die Schnittstelle Fernseher. Die Flexibilität dieser Lösung kann auch die Benachrichtigung von Angehörigen, bis hin zum Bildtelefon über die verbaute TV-Anlage beinhalten.

Die Software weist unter anderem folgende Eigenschaften auf:
- mit interner Uhr (Kalender)
- automatische Kalibrierung (Anpassung an die Umgebung - Größe des Raumes etc.)
- Speicherplatz für log-Daten und Kalibrierdateien
- Betriebssystem Linux / ARM
- Softwareprogrammierung möglichst in Perl, Python
- Fernwartungsmodul (GSM) inklusive Nutzung zur Alarmierung

Durch die erfindungsgemäßen und die weiteren aufgeführten Maßnahmen ist es möglich, dass hilfsbedürftigen Personen, sowie den Personen, die den unvermeidlichen Alterungsprozess in einem Stadium erreicht haben, wo das selbstständige Handeln als eingeschränkt bewertet werden muss, ein hohes Maß an Sicherheit und Unterstützung in Notfällen gegeben werden kann.

### Bezugszeichenliste

- 1: Eingangstür
- 2: Anwesen heits-/Abwesenheitskontrolle
- 3: Bewegungsdetektion
- 4: Sensorleiste
- 5: Sensor
- 6: Radarbewegungsmelder (Sensor)
- 7: Radarbewegungsmelder (Sensor)

## Patentansprüche

1. Verfahren zur Überwachung der momentanen Mobilität von Personen in privaten oder öffentlichen Räumen, wobei
mittels einer in einem zu überwachenden Raum sich vertikal vom Boden erstreckenden und in mindestens zwei
Überwachungssektoren aufgeteilten Sensorik (5, 6, 7) eines Systems ermittelt wird, ob sich eine in dem Raum befindliche Person in einer stehenden oderlaufenden oder in einer von dieser Position abweichenden Position befindet, dass in Abhängigkeit von der Art der Räumlichkeit, von der Tageszeit und von der Häufigkeit und dem Zeitablauf der in den Überwachungssektoren ermittelten Bewegungen auf eine gestörte oder ungestörte Mobilität der Person geschlossen wird und automatisch vorgegebene Maßnahmen ausgelöst werden und die ermittelten Bewegungen softwaremäßig als Bewegungsparameter erlernt und durch Vergleich mit einem in einem Datenübermittlungsmodul hinterlegten typischen Bewegungsparametem logisch und analytisch ausgewertet werden und somit eine untypische tägliche Mobilität von einer typischen täglichen Mobilität unterschieden wird,
**dadurch gekennzeichnet, dass** zu Beginn der Überwachung ermittelt wird, ob nur eine Person, mehrere oder keine Personen in den zu überwachenden Räumlichkeiten zugegen ist/sind, dass in Abhängigkeit davon eine Aktivierung oder Deaktivierung des Systems erfolgt und dass bei Aktivierung durch die in den Überwachungssektoren ermittelten Bewegungen eine Bewertung der Mobilität erfolgt und die Sensorik und/oder das gesamte System in den Stand-by-Modus gefahren wird, wenn die Anwesenheit von mehreren Personen ermittelt ist.

2. Verfahren nach Anspruch 1, **dadurch gekennzeichnet, dass** als von der stehenden bzw. laufenden Position abweichende Position eine sitzende, auf einem Liegemöbel liegende oder auf dem Boden liegende oder knieende Position detektiert wird.

3. Verfahren nach einem der Ansprüche 1 oder 2, **dadurch gekennzeichnet, dass** bei dem Verdacht einer gestörten Mobilität eine Wechselsprechfunktion zu der in der jeweiligen Räumlichkeit befindlichen Person hergestellt und deren Befindlichkeit erfragt wird und dass bei Nichtreaktion oder negativer Aussage der Person automatisch ein Notsignal zur Hilfeleistung ausgelöst wird.

4. Vorrichtung zur Überwachung der momentanen Mobilität von Personen in privaten oder öffentlichen Räumen, wobei in einem zu überwachenden Raum eine vertikale Sensorleiste (4) angeordnet ist, die mindestens zwei übereinander angeordnete Bewegungsmelder (5, 6, 7) aufweist, die den zu überwachenden Raum in mindestens zwei waagerechte Detektionsebenen aufteilen, wobei jeder Sensor in seiner Detektionsebene elektronisch einen aktuellen Status einer Bewegung einer Person erfasst und dass ein Datenübermittlungsmodul vorgesehen ist, in dem der erfasste Status softwaremäßig als Bewegungsparameter lernbar, durch Vergleich mit im Datenübermittlungsmodul hinterlegten typischen Bewegungsparametem logisch und analytisch auswertbar und somit eine untypische tägliche Mobilität von einer typischen täglichen Mobilität unterscheidbar ist, **dadurch gekennzeichnet, dass** im Eingangsbereich der zu überwachenden Räume ein Messsensor (2) zur Ermittlung der Anwesenheit von Personen angeordnet ist oder dass die Ermittlung der Anwesenheit von Personen von der Sensorleiste (4) je nach deren Standort mit übernommen wird und die Sensorleiste (4) und/oder das gesamte System in den Stand-by-Modus gefahren wird, wenn die Anwesenheit von mehreren Personen ermittelt ist.

5. Vorrichtung nach Anspruch 4, **dadurch gekennzeichnet, dass** entsprechend der Anordnung der Bewegungsmelder (5, 6, 7) auf der Sensorleiste (4) im Raum drei waagerechte Detektionsebenen (ROT, GELB, GRÜN) gebildet sind.

6. Vorrichtung nach Anspruch 4, **dadurch gekennzeichnet, dass** eine höhere Anzahl an Bewegungsmeldern verbaut ist, wobei im anfänglichen "Lernmodus" die optimale Position der verwendeten Sensoren berechnet wird, um die unterschiedliche Größe von Personen zu berücksichtigen und dadurch, dass sich die Sensorleiste (4) der jeweiligen Umgebung anpasst, eine aufwendige Kalibrierung der Sensoren zu vermeiden.

7. Vorrichtung nach einem der Ansprüche 4 bis 6, **gekennzeichnet durch** eine Vorrichtung zur direkten Kommunikation mit der zu überwachenden Person mit Hilfe einer individuell wählbaren Variante von Alarmierungseskalationsstufen von lokaler Alarmierung bis hin zur Alarmierung über einen Telefonanschluss oder ein Schwesterrufsystem.

8. Vorrichtung nach Anspruch 7, **dadurch gekennzeichnet, dass** die Vorrichtung zur direkten Kommunikation eine Wechselsprechanlage ist.

9. Vorrichtung nach einem der Ansprüche 4 bis 8, **gekennzeichnet durch** eine Vorrichtung mittels der zum Schutz vor fehlerhafter Notrufabsetzung eine akustische Resonanz der zu überwachenden Person in vermeintlicher Notlage abrufbar ist.

10. Vorrichtung nach einem der Ansprüche 4 bis 9, **dadurch gekennzeichnet, dass** das Datenübermittlungsmodul zur Auswertung der erfassten Daten und Steuerung von Serviceleistungen eine zentrale Recheneinheit pro zusammengehöriger Räume aufweist.

11. Vorrichtung nach einem der Ansprüche 4 bis 10, **dadurch gekennzeichnet, dass** die Sensorleiste (4) bei Vorhandensein von Bewegung im Inneren der Wohnung direkt aktiviert und bei Nichtvorhandensein von Bewegung im Inneren der Wohnung zeitgesteuert deaktiviert wird.

## Claims

1. A method for monitoring the current mobility of persons in private or public spaces,
wherein
it is determined by means of sensor technology (5, 6, 7) of a system, which extends vertically from the floor in a space which is to be monitored and divided into at least two monitoring sectors, whether a person located in the space is in a standing or walking position or in a position deviating from this position, as a function of the type of room, the time of day and the frequency and passage of time of the movements determined in the monitoring sectors, impaired or unimpaired mobility of the person is inferred and automatically specified measures are triggered and the determined movements are leant by the software as motion parameters and are evaluated logically and analytically by being compared with a typical motion parameter stored in a data transmission module and thus atypical daily mobility is distinguished from typical daily mobility,
**characterized in that** at the start of the monitoring it is determined whether only one person, multiple persons or no persons is/are present in the rooms which are to be monitored, that as a function of whether the system is activated or deactivated, and that if the system is activated by the movements determined in the monitoring sectors the mobility is assessed and the sensor technology and/or the entire system is/are placed in the standby mode, if the presence of multiple persons is determined.

2. The method according to Claim 1, **characterized in that** a sitting position, a lying position on lounging furniture or a lying or kneeling position on the floor is detected as a position deviating from the standing and/or walking position.

3. The method according to any one of Claims 1 or 2, **characterized in that** if impaired mobility is suspected an intercom function is established with the person located in the respective room and their location is enquired about and that in the event that there is no response from the person or the person issues a negative statement, an emergency signal for help is automatically triggered.

4. An apparatus for monitoring the current mobility of persons in private or public spaces, wherein a vertical sensor strip (4) is arranged in a space which is to be monitored, said vertical sensor strip comprising at least two motion detectors (5, 6, 7) arranged above one another, which divide the space which is to be monitored into at least two horizontal detection levels, wherein each sensor electronically records the current status of movement of a person in its detection level and that a data transmission module is provided, in which the recorded status can be learnt by the software as motion parameters, can be logically and analytically evaluated by being compared with typical motion parameters stored in the data transmission module and thus atypical daily mobility can be distinguished from typical daily mobility, **characterized in that** a measuring sensor (2) for determining the presence of persons is arranged in the entrance area of the spaces to be monitored or that the determination of the presence of persons is also assumed by the sensor strip (4) depending on the latter's location and the sensor strip (4) and/or the entire system is placed in the standby mode, if the presence of multiple persons is determined.

5. The apparatus according to Claim 4, **characterized in that** three horizontal detection levels (RED, YELLOW, GREEN) are formed in the space according to the arrangement of the motion detectors (5, 6, 7) on the sensor strip (4).

6. The apparatus according to Claim 4, **characterized in that** a higher number of motion detectors is installed, wherein the optimum position of the sensors used is calculated in the initial "learning mode", in order to take account of the different size of persons and **in that** the sensor strip (4) adjusts itself to the respective surroundings, in order to avoid a costly calibration of the sensors.

7. The apparatus according to any one of Claims 4 to 6, **characterized by** an apparatus for directly communicating with the person to be monitored with the aid of an individually selectable variant of alarm escalation levels from a local alarm up to an alarm via a telephone connection or a nurse calling system.

8. The apparatus according to Claim 7, **characterized in that** the apparatus for directly communicating is an intercom.

9. The apparatus according to any one of Claims 4 to 8, **characterized by** an apparatus by means of which an acoustic resonance of the person to be monitored can be called up in a supposed emergency situation, to protect against making an erroneous emergency call.

10. The apparatus according to any one of Claims 4 to 9, **characterized in that** the data transmission module for evaluating the recorded data and controlling services comprises a central processing unit for each connected space.

11. The apparatus according to any one of Claims 4 to 10, **characterized in that**, if there is motion inside the apartment, the sensor strip (4) is directly activated and, if there is no motion inside the apartment, the sensor strip (4) is deactivated in a time-controlled manner.

## Revendications

1. Procédé de surveillance de la mobilité momentanée de personnes dans des locaux privés ou publics, dans lequel,
au moyen de capteurs (5, 6, 7) d'un système s'étendant verticalement à partir du sol dans un local à surveiller et répartis en au moins deux secteurs de surveillance, il est déterminé si une personne présente dans le local se trouve dans une position stationnaire ou en marche ou se trouve dans une position différant de cette position, il est conclu, en fonction de la nature des locaux, de l'heure de la journée et de la fréquence et du déroulement dans le temps des mouvements déterminés dans les secteurs de surveillance, à une mobilité perturbée ou non perturbée de la personne, et des mesures prédéfinies sont déclenchées automatiquement, et les mouvements déterminés sont appris par logiciel en tant que paramètres de mouvement et sont analysés de façon logique et analytique par comparaison avec des paramètres de mouvement typiques enregistrés dans un module de transmission de données, ce qui permet d'opérer une distinction entre une mobilité journalière atypique et une mobilité journalière typique,
**caractérisé en ce que**, au début de la surveillance, il est déterminé si une seule personne, plusieurs personnes ou aucune personne est/sont présente(s) dans les locaux à surveiller, **en ce que**, en fonction de cela, une activation ou désactivation du système est effectuée, et **en ce que**, en cas d'activation par les mouvements dans les secteurs de surveillance, une évaluation de la mobilité est effectuée, et les capteurs et/ou le système global est/sont conduit(s) dans le mode stand-by si la présence de plusieurs personnes est déterminée.

2. Procédé selon la revendication 1, **caractérisé en ce qu'**une position assise, allongée sur un meuble de couchage ou allongée sur le sol ou à genoux est détectée en tant que position différant de la position stationnaire ou en marche.

3. Procédé selon l'une des revendications 1 ou 2, **caractérisé en ce que**, en cas de suspicion d'une mobilité perturbée, une fonction intercom avec la personne située dans les locaux respectifs est établie et une demande portant sur son état d'esprit est formulée et **en ce que**, en l'absence de réaction ou en en cas de déclaration négative de la personne, un signal d'alarme demandant une aide est déclenché automatiquement.

4. Dispositif de surveillance de la mobilité momentanée de personnes dans des locaux privés ou publics, une barrette de capteurs (4) verticale étant disposée dans un local à surveiller, laquelle présente au moins deux détecteurs de mouvement (5, 6, 7) disposés l'un sur l'autre qui divisent le local à surveiller en au moins deux plans de détection horizontaux, chaque capteur saisissant électroniquement dans son plan de détection un statut actuel d'un mouvement d'une personne, et il est prévu un module de transmission de données dans lequel le statut détecté peut être appris par logiciel en tant que paramètre de mouvement, peut être analysé de façon logique et analytique par comparaison avec des paramètres de mouvement typiques enregistrés dans le module de transmission de données, ce qui permet d'opérer une distinction entre une mobilité journalière atypique et une mobilité journalière typique, **caractérisé en ce que**, dans la zone d'entrée des locaux à surveiller, il est disposé un capteur de mesure (2) destiné à déterminer la présence de personnes ou **en ce que** la détermination de la présence de personnes est prise en charge conjointement par la barrette de capteurs (4) respectivement en fonction de leur emplacement, et la barrette de capteurs (4) et/ou le système global est conduit dans le mode stand-by si la présence de plusieurs personnes est déterminée.

5. Dispositif selon la revendication 4, **caractérisé en ce que**, conformément à la disposition des détecteurs de mouvement (5, 6, 7) sur la barrette de capteurs (4) dans le local, trois plans de détection horizontaux (ROUGE, JAUNE, VERT) sont formés.

6. Dispositif selon la revendication 4, **caractérisé en ce qu'**un nombre plus élevé de détecteurs de mouvement est installé, dans lequel, dans le « mode d'apprentissage » initial, la position optimale des capteurs utilisés est calculée pour prendre en compte la taille différente de personnes, et un étalonnage compliqué des capteurs étant évité par le fait que la barrette de capteurs (4) s'adapte à l'environnement respectif.

7. Dispositif selon l'une des revendications 4 à 6, **caractérisé par** un dispositif de communication directe avec la personne à surveiller à l'aide d'une variante sélectionnable d'étapes d'intensification d'alarme à partir de l'alarme locale jusqu'à l'alarme via une liaison téléphonique ou un système d'appel d'infirmière.

8. Dispositif selon la revendication 7, **caractérisé en ce que** le dispositif de communication directe est un interphone.

9. Dispositif selon l'une des revendications 4 à 8, **caractérisé par** un dispositif au moyen duquel, pour assurer une protection contre une annulation erronée de l'appel d'urgence, une résonance acoustique de la personne à surveiller peut être consultée en situation d'urgence présumée.

10. Dispositif selon l'une des revendications 4 à 9, **caractérisé en ce que** le module de transmission de données présente une unité de calcul centrale par locaux apparentés pour l'analyse des données détectées et pour la commande d'interventions de service.

11. Dispositif selon l'une des revendications 4 à 10, **caractérisé en ce que** la barrette de capteurs (4) est directement activée en cas de présence de mouvement à l'intérieur du logement et est désactivée de façon temporisée en cas d'absence de mouvement à l'intérieur du logement.
